(19) Europäisches Patentamt
European Patent Office
Office européen des brevets

(11) Publication number: 0 218 411 B1

(12) # EUROPEAN PATENT SPECIFICATION

(45) Date of publication of the patent specification: 29.11.89

(51) Int. Cl.⁴: C 01 B 17/765, C 01 B 17/50, C 01 B 17/80

(21) Application number: 86307315.1

(22) Date of filing: 23.09.86

(54) **Sulphuric acid.**

(30) Priority: 30.09.85 GB 8524083

(43) Date of publication of application: 15.04.87 Bulletin 87/16

(45) Publication of the grant of the patent: 29.11.89 Bulletin 89/48

(84) Designated Contracting States: BE DE FR IT NL

(56) References cited:
DE-B-2 157 198
FR-A-2 176 683
FR-A-2 386 479
GB-A-1 602 621

(73) Proprietor: The BOC Group plc, Chertsey Road, Windlesham Surrey GU20 6HJ (GB)

(72) Inventor: Watson, Richard William, 1 Woodlands Grove, Ilkley West Yorkshire LS29 9BX (GB)

(74) Representative: Wickham, Michael et al, c/o Patent and Trademark Department The BOC Group plc Chertsey Road, Windlesham Surrey GU20 6HJ (GB)



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

This invention relates to an oxidation method for forming sulphuric acid. In particular, it relates to a method and plant having a first step in which sulphur dioxide is liberated from a feedstock comprising at least one sulphate, or sulphuric acid, or a mixture of both, and a second step in which the thus liberated sulphur dioxide is oxidised to sulphur trioxide. Sulphuric acid of a chosen concentration is then typically made by absorbing the sulphur trioxide in sulphuric acid of less than the chosen concentration.

The manufacture of sulphuric acid is of course an important and well — established chemical process. Since about the 1930s, sulphuric acid has generally been made by the contact process in which a gaseous mixture including sulphur dioxide and oxygen is passed at elevated temperature over a plurality of stages of a suitable vanadium catalyst, whereby sulphur trioxide is formed by the reaction between sulphur dioxide and oxygen as follows:

$$2SO_2 + O_2 = 2SO_3$$

The resulting sulphur trioxide is typically absorbed in the sulphuric acid solution to give a more concentrated sulphuric acid. The reaction between sulphur dioxide and oxygen is exothermic and thus the gas mixture is cooled as it passes from one catalytic stage to the next one. By employing a converter with four catalytic stages it is typically possible to convert to sulphur trioxide more than 98% by volume of the initial sulphur dioxide.

Various methods are available for the manufacture of a suitable gas mixture containing sulphur dioxide an oxygen. One common method is to burn sulphur in air. The gas mixture is typically formed containing about 11% by volume of sulphur dioxide and about 10% of oxygen, the remainder consisting essentially of nitrogen. Although it is possible using some sulphur burners to obtain a concentration of sulphur dioxide in the gas mixture as high as 16% by volume, it is not normally considered economic to exceed about 12 or 13%, since, amongst other reasons, such a practice would entail the use of a waste heat boiler of the water tube kind which is considerably more expensive than the conventional fire tube waste heat boilers that are employed when relatively dilute gas mixtures containing sulphur dioxide are formed.

A second common method of generating sulphur dioxide is by roasting a sulphide ore. Commonly, iron pyrites is employed for this purpose. Typically, an iron pyrites ore having a 48% sulphur content can be obtained, and by reacting the sulphur content with oxygen supplied form an air stream used to support the roasting reaction, concentrations of sulphur dioxide of up to 14% can typically be achieved. Typically, if ores other than iron pyrites are used as the source of sulphur, it is more difficult to obtain such a concentrated sulphur dioxide stream and the concentration of sulphur dioxide in the resulting gas mixture may fall to well below 10% by volume.

A third common method of generating the sulphur dioxide is by the thermal cracking of a sulphate waste typically containing sulphuric acid and/or an inorganic sulphate. Typical sources of such waste are petroleum refinery sludges and waste streams from inorganic chemical processes employing sulphuric acid. Since the cracking of an inorganic sulphate or sulphuric acid to yield sulphur dioxide is an endothermic reaction, it is necessary to provide heat continuously for the reaction. This may be done by mixing the sludge with either a liquid or gaseous fuel such as a hydrocarbon, or a solid fuel such as coal or coke, and the supplying air to support the combustion of the fuel, thereby generating the necessary heat for the cracking reaction. In practice, depending on the composition of the feedstock, it is possible to obtain a gas mixture containing about 7% by volume of sulphur dioxide from such methods, although, with some waste streams, difficulties arise even in obtaining the level of sulphur dioxide that reaches 7% by volume. Moreover, even in the event that the concentration of sulphur dioxide is adequate, the additional capital cost of the plant required to purify or clean the resulting sulphur dioxide containing gas mixture frequently makes conversion of sulphate wastes economically unattractive.

From the point of view of the production of sulphuric acid, the concentration of sulphur dioxide in the gas fed to the catalytic converter and the relative proportions of sulphur dioxide and oxygen in the gas mixture are both important parameters. For a catalytic converter of given capacity, the greater the concentration of sulphur dioxide in the incoming gas mixture, the greater is the rate of production of sulphur trioxide and hence sulphuric acid. On the other hand, the greater the ratio of oxygen to sulphur dioxide in the gas mixture passed to the first stage of the catalytic converter, the greater is the percentage conversion of the sulphur dioxide. In practice, sulphur burners and other sources of sulphur dioxide are operated with excess air, and, as the volume of sulphur dioxide in the resulting combustion products increases, so the volume of residual oxygen in the combustion products decreases. Thus, increasing the concentration of sulphur dioxide in the gas mixture fed to the catalytic converter to increase the rate of product sulphuric acid has the effect of reducing the ration of oxygen to sulphur dioxide and therefore the effect of reducing the percentage conversion. This phenomenon is illustrated in «Sulphur and Sulphuric Acid Plants: Increasing Conversion Efficiency» D.B. Burkhart, Chemical Engineering Progress, volume 64, No. 11, pp66 to 70. In pages 65 and 66 of this paper, there is teaching that a lower sulphur dioxide concentration in the converter feed gas permits a higher conversion efficiency in adiabatic catalyst layers. It is further disclosed that when using a four stage converter, respective conversion efficiencies are 98% for a feed comprising 8% by volume of sulphur dioxide, and 13% by volume of oxygen; 97% for a feed comprising 10% by volume of sulphur dioxide and 11% by volume of oxygen, and 95% for a feed comprising 12% by volume of sulphur dioxide and 9% by volume of oxygen. Although some improvement in these percentage conversions can be achieved by diluting with air the gas mixtures entering for example the third and fourth stages of the catalytic converter, and by absorbing sulphur trioxide intermediate the third and fourth stages, in addition to after the fourth stage, it is generally preferred in commercial practice not to exceed greatly a concentration of sulphur dioxide of 11% by volume in the gas fed to the converter. Moreover, in order not to lose production for a given size of converter, it is preferred that the concentration of sulphur dioxide in the gas fed to the converter should not be significantly less than 11% by volume. It is to be appreciated that even if the volume of sulphur dioxide in the incoming gas mixture is as high as 12%, and the volume of oxygen is 9%, there is a substantial stoichiometric excess of oxygen over that needed for complete conversion of sulphur dioxide to sulphur trioxide. The desired degree of conversion in each catalytic stage is thus primarily dependent upon the quantity of catalyst and the residence time in that stage.

It has been proposed to use commercially pure oxygen in the catalytic converter so as to improve the balance that can be struck on the one hand between the rate of production of sulphuric acid and on the other hand the percentage conversion. Thus, UK patent specification No. 1 602 108 (BOC Limited) discloses enriching with commercially pure oxygen the gas mixture passing through the converter at an interstage location. A preferred interstage location is between the first and second stages, although it is alternatively or additionally possible to add oxygen of such purity between the second and third stages, and between the third and fourth stages. Such use of oxygen enables the percentage conversion to be increased without a corresponding loss in production, or alternatively, an increase in production without loss of conversion efficiency. These benefits are gained by virtue of a substantial increase in the ration of oxygen to sulphur dioxide in the gas mixture downstream of the first catalytic stage. If it is merely required to increase the conversion efficiency, no change is made in the composition of the gas mixture entering the catalytic converter. If an increase in production is required, the proportion of sulphur dioxide in the gas mixture entering the first stage of the catalytic converter is increased up to a maximum of 16% by volume. In the event that such an increase in sulphur dioxide concentration is made the amount of catalyst used in the first stage is reduced. Thus, the amount of catalyst used in the first stage is chosen so as to keep the temperature of the gas mixture immediately downstream of the catalyst below 600°C. In order to maintain distribution across the catalyst and supporting material in the first stage substantially unaltered, dummy catalyst typically in the form of an extra support material is employed. As disclosed in Examples 2a and 2b of the aforesaid patent specification, by increasing the volume of sulphur dioxide in the gas mixture fed to the first stage of the converter from 10% by volume to 11.7% by volume and making a corresponding decrease in the volume of oxygen from 10.9% to 9.3% by volume, and replacing 21% of the catalyst with dummy, it is possible to increase the rate of production of sulphuric acid by more than 11% when pur oxygen is added between the first and second stage catalysts and between the second and third stage catalysts.

UK patent specification 1 603 093 (BOC Limited) discloses a process involving the burning of sulpur using oxygen to support combustion so as to form a gas mixture typically containing more than 90% by volume of sulphur dioxide. In order to controle the temperature in the sulphur burner, a proportion of the sulphur dioxide is recycled through the burner. A gas mixture comprising sulphur dioxide, a diluent gas such as nitrogen or helium, and oxygen is then formed, and is passed through at least three catalytic stages. After absorption of the sulphur trioxide that is formed by the catalytic reaction between sulphur dioxide and oxygen, a major proportion of the residual gas is typically recycled, being mixed with the gas produced by the burner to form the gas mixture for introduction into the catalytic converter. Commercially pure oxygen is typically added to the gas mixture entering the second and third stages of the catalytic converter. In the final stage of the catalytic converter a large excess of oxygen over the stoichiometric quantity required to react with the remaining sulphur dioxide is employed. It will be appreciated that the process described in UK specification 1 603 093 is generally suitable for use only when sulphur is burnt. Moreover, special control equipment is required to operate the recycle of sulphur dioxide to the sulphur burner.

It has been proposed in UK patent specification 1 602 621 (BOC Limited) to enrich in oxygen the air supplied to burner of a mixture comprising sulphuric acid waste and a liquid hydrocarbon fuel. Typically, the secondary combustion air is enriched with oxygen to form a gas mixture containing 25% by volume of oxygen. In this example, gas comprising sulphur dioxide, carbon dioxide, oxygen, nitrogen and water vapour is formed. The gas typically contains 16% by volume of sulphur dioxide and 16% by volume of carbon dioxide. It is disclosed that if the gas is to be used to form fresh sulphuric acid it may typically be diluted with air to reduce the concentration of sulphur dioxide to 8 to 10% by volume before being passed into the converter of a standard plant for producing sulphuric acid.

In a news feature entitled «New Processes Focus Interest in Oxygen» in Chemical Engineering, February 26th 1968, pp88 to 90, there is disclosed, at page 90, a process in which oxygen-enriched air is employed on a large scale of copper smelting. The oxygen content of the air fed to the smelting plant is increased to about 30%. Commercially pure oxygen is also used to enrich the sulphur dioxide containing gas obtained from the smelter. It is disclosed that a daily increase in acid production is expected to be obtained. Since copper sulphide is a relatively low grade sulphide ore, it is to be assumed that the purpose of the oxygen enrichment in the smelter is to increase to a value in the range 8 to 11% by volume the concentration of sulphur dioxide in the resultant sulphur dioxide containing gas mixture.

In the foregoing discussion of the state of the art, it can be appreciated that sulphuric acid plants are designed with converters able to process a feedstock containing about 11% by volume of sulphur dioxide and stoichiometric excess of oxygen. Commercially pure oxygen may be added to the converter

after its first stage to improve the conversion efficiency or the rate of production of sulphuric acid (by increasing the ratio of oxygen to sulphur dioxide downstream of the first stage), and if the process for producing sulphur dioxide results in production of relatively dilute feedstock, concentration of sulphur dioxide in the feedstock can be increased to about 11% by enriching in oxygen the air employed in the process in which sulphur dioxide is formed.

None of the above-mentioned improvements in sulphuric acid and sulphur dioxide production technology is thus likely to offer substantial advantages in the processing of sulphate wastes or other low grade sources of sulphur. It is an aim of the present invention to provide an improved method of forming sulphuric acid from such wastes or from low grade sulphide ores.

According to the present invention there is provided a method of manufacturing sulphuric acid, comprising the steps of:

a) forming sulphur dioxide from a sulphur-containing material.

b) burning a carbon-containing fuel to provide heat for the formation of the sulphur dioxide from the sulphur-containing material, and supplying oxygen-rich gas (as herein defined) to support the combustion of the fuel;

c) forming a gas mixture comprising said sulphur dioxide and the gases resulting from the combustion of said fuel;

d) drying said gas mixture, the gas mixture after drying containing at least 30% by volume of carbon dioxide and more than 16% by volume of sulphur dioxide.

e) subjecting the dried gas mixture to a plurality of steps of catalytic conversion so as to convert sulphur dioxide in the mixture to sulphur trioxide;

f) adjusting the temperature of the gas mixture upstream of each said stage, and adjusting the mole ratio of sulphur dioxide to oxygen in the gas mixture upstream of the first stage and intermediate the first and second stages, wherein said mole ratio is adjusted by adding oxygen-rich gas (as herein defined) to the gas mixture and the gas mixture entering the first stage has, after its adjustment, a mole ratio of sulphur dioxide to oxygen greater than 2:1; and

g) absorbing said sulphur trioxide to form sulphuric acid.

By the term «oxygen-rich gas» as used herein, we mean substantially pure oxygen or a gas mixture, typically oxygen-enriched air, comprising more than 30% by volume of oxygen.

The method according to the invention facilitate the attainment of a relatively large rate of production of sulphuric acid from a converter of given size. Whereas in conventional processes, the extent of reaction the first catalytic stage (or «pass») is determined by the residence time of the gas mixture in that stage there being a large excess of oxygen present in the gas entering the first stage, in the method according to this invention, comparable rates of conversion are preferably achieved when in the first two stages relatively high concentrations of sulphur dioxide are employed but the concentration of oxygen in the reacting gas mixture is limited. Thus, in the method according to the invention, the use of large excesses of oxygen in the first two stages of the converter may be avoided. The choice of the concentration of sulphur dioxide in the gas mixture entering the converter is influenced by the concentrations of carbon dioxide and nitrogen in the mixture. Carbon dioxide has a substantially higher molar heat capacity than nitrogen. The ability of the converter to handle gas mixtures with relatively large concentrations of sulphur dioxide thus increases with increasing carbon dioxide concentrations. It is preferred that the gas mixture includes at least 50% by volume of carbon dioxide and at least 20% by volume of sulphur dioxide after drying. If the oxygen-rich gas employed in the generation of the sulphur-dioxide is substantially pure oxygen, with the result that the gas mixture (after drying) contains more than 60% by volume of carbon dioxide and substantially no nitrogen, the gas mixture will typically contain at least 25% by volume of sulphur dioxide. If the oxygen-rich gas employed in the generation of the sulphur dioxide is oxygen-enriched air the proportion of carbon dioxide in the said gas mixture (after drying) decreases with increasing nitrogen concentration in the oxygen-rich gas (and hence in the said gas mixture) and the concentration of sulphur dioxide in the said gas mixture also falls. We therefore prefer whenever possible to use substantially pure oxygen as the oxygen-rich gas in the generation of the sulphur dioxide. Similarly, we prefer to use substantially pure oxygen as the oxygen-rich gas in adjusting the mole ratio of sulphur dioxide to oxygen in the converter.

The sulphur dioxide may typically be generated by thermally cracking a sulphate waste material. By the term «sulphate waste material» as used herein we mean a waste material comprising sulphuric acid and/or a sulphate (typically an inorganic sulphate). Examples of such sulphate waste material include petroleum refinery sludge, spent pickling liquor and other wastes from chemical or metallurgical processes in which sulphuric acid is employed. The sulphur dioxide may alternatively be generated by roasting a low grade sulphide ore. The fuel in such an example is employed to generate the necessary heat to sustain the reaction by the sulphide and oxygen.

The sulphate waste material is preferably cracked in the same chamber as that in which the fuel is burned. The choice of the kind of plant selected to perform these operations will depend on the nature of the sulphate waste. In the event that the sulphate waste material is largely liquid and does not give rise to substantial solid residues on combustion, the general kind of apparatus described in UK patent specification 1 602 621 may be employed, with appropriate modifications for operation with pure, or nearly pure, oxygen, and a liquid or gaseous hydrocarbon fuel may be used to support combustion of the oxygen-rich gas. If the sulphate waste material includes a significant proportion of inorganic sulphate, a residue of the corresponding oxide will be formed and it is generally desirable to use a plant for the thermal cracking that enables the residue to be discharged therefrom. For example, the sulphate waste material may be cracked in a rotary or other kiln, (for example a turbulent layer roaster) or in a fluidised bed. In a fluidised bed, the oxygen-rich gas is preferably employed to fluidise the bed, and a solid fuel such as coke may be burned to raise the temperature necessary to crack the sulphate waste material fed into the bed. Whatever plant is selected for performing the thermal cracking of the sulphate waste material and combustion of the fuel, the endothermic nature of the thermal cracking reaction makes it possible to prevent excessive temperatures being created as a result of the combustion typically without the need to use a refrigerant to provide cooling, and thus temperature control of a combined thermal cracking/combustion plant is not unduly difficult.

The fuel is preferably burned with a small stoichiometric excess of oxygen (for example, sufficient to leave about 2% by volume of oxygen in the gas mixture leaving the cracker). In the event that a common chamber is employed to crack the sulphate waste material and burn the fuel, the gases resulting from these two operations will mix with one another to form the aforesaid gas mixture. In the event that the cracking of the sulphate waste is performed in a fluidised bed, and adequate fluidising velocities cannot be achieved with only a small stoichiometric excess of oxygen if substantially pure oxygen is used as the fluidising gas, then it is preferred to achieve the necessary fluidising velocity with oxygen-enriched air as the fluidising gas, rather than to attempt to operate the fluidised bed with a large excess of oxygen.

In conventional processes the percentage conversion achieved in the first stage is controlled by residence time so as to prevent equilibrium being closely approached, since such an approach would result in an excessive temperature being created. In the method according to the invention we prefer to choose a mole ratio of sulphur dioxide to oxygen in the gas mixture entering the first stage such that a closer approach to equilibrium is permitted without an excessive temperature being created and such that the dependence of the extent of reaction on residence time is diminished. Accordingly, we employ in the gas mixture entering the first stage a mole ratio of sulphur dioxide to oxygen greater than two to one, and preferably greater than three to one to achieve a percentage conversion of less than 50%. Such ratios make it possible to keep down the proportion of residual oxygen in the gas mixture leaving the first stage. At low oxygen concentrations the rate of reaction between sulphur dioxide and oxygen is reduced, and thus with low residual oxygen levels it becomes possible to use a relatively deep bed of catalyst in the first stage. Thus, the use of an unduly shallow catalyst bed in the first stage can be avoided with advantage since a shallow bed tends to give rise to difficulties in achieving uniform gas distribution across the bed. Although, we prefer to use a relatively deep first bed, there is not necessarily a consequential increase in the total amount of catalyst in the first bed (compared with a conventional converter). Particularly when the gas mixture entering the first stage has a sulphur dioxide concentration of over 25% by volume, it is possible to use a converter in the invention that has a substantially smaller cross-sectional area in comparison to a conventional converter adapted to produce sulphur trioxide at the same rate. This reduction in cross-sectional areas will tend to decrease the overall requirement for catalyst per unit sulphur trioxide produced even if relatively deep catalyst beds are employed in the first and subsequent catalyst stage.

In the second stage of the catalytic conversion in a method according to the invention it is similarly desirable to employ a mole ratio of sulphur dioxide to oxygen greater than two to one, although this mole ratio is preferably chosen to be less than that chosen for the first stage.

The method according to the invention preferably employs four or five stages of catalytic conversion. Oxygen-rich gas is preferably added to the gas mixture intermediate the second and third stages as well as upstream of the first stage and intermediate the first and second stages. It is further preferred to add sufficient oxygen intermediate the second and third stages to create a sufficient excess of oxygen so as to obviate the need to add oxygen-rich gas to the third, fourth and fifth stages.

The gas mixture leaving the final catalytic stage may be absorbed in sulphuric acid to give a more concentrated sulphuric acid. The gas mixture leaving an intermediate catalytic stage is also desirably subjected to absorption to recover its sulphur trioxide content.

Notwithstanding the relatively large concentrations of sulphur dioxide in the gas mixture entering the converter, we believe it is possible to obtain conversion efficiencies greater than 99.5% with performance of an intermediate absorption.

The method and apparatus according to the present invention will now be described by way of example with reference to the accompanying drawings, in which:

Figure 1 is a schematic circuit diagram of a plant for converting sulphate waste material into sulphuric acid;

Figure 2 is a graph schematically illustrating the different effects of carbon dioxide and nitrogen on the percentage conversion achievable up to a given temperature.

Figures 3 and 4 are graphs schematically illustrating the variation of the reaction rate between sulphur dioxide and oxygen with sulphur dioxide concentration.

Referring to Figure 1 of the drawings, a turbulent layer thermal cracker 2 has inlets 4, 6 and 8 for fuel, oxygen (more than 99.9% pure) and sulphate waste material. The sulphate waste material may for example be a sulphate waste from a plant for the production of titanium dioxide pigment by the sulphate route. Such waste may, for example, comprise an aqueous medium including 14 to 20% by weight of sulphuric acid, up to 20% by weight of iron sulphate, and traces of other sulphates. The cracker 2 has an outlet 10 for gaseous products communicating with a heat exchanger 12 for cooling the gaseous mixture to a temperature below 100°C. The cooled gas mixture is then passed through a clean-up plant 14 which is of the kind conventionally employed in sulphuric acid production plants of the so called «metallurgical» kind. Such clean-up plant 14 may therefore

include a cyclone, an electrostatic dust precipitator, a gas scrubbing tower and a mist precipitator. The cooled, cleaned gas from the clean-up plant 14 is then passed into a drying tower 16 which, again, may be of the type conventionally used in a typical sulphuric acid production plant of the metallurgical kind. The drying process thus typically involves contact of a gas mixture with sulphuric acid. In the example, after drying, the gas mixture comprises carbon dioxide, oxygen and sulphur dioxide in the approximate mole ratio of 65.5 to 2 to 8.

The dried gas mixture is then passed through a heat exchanger 18 in which it is heated to a temperature suitable for its introduction into a catalytic converter 22. This temperature is in the range 400 to 450°C. Upstream of its entry into the catalytic converter 22, the gas mixture is enriched in oxygen by adding to it oxygen of a purity greater than 99.9% by volume through a passage 20. As shown, the passage 20 is intermediate the heat exchanger 18 and the converter 22. It may alternatively be positioned intermediate the dryer 16 and the heat exchanger 18. Sufficient oxygen is preferably added through the passage 20 to increase the mole ratio of to oxygen to sulphur dioxide in the incoming gas mixture from 2:28 to a value in the range 7:28 to 8:28.

The catalytic converter 22 comprises four stages or passes. In Figure 1 the four passes are indicated by the reference numerals 24, 26, 28 and 30. Each catalyst layer, typically formed of conventional catalyst material of the vanadium pentoxide kind, in each pass is indicated by the reference numeral 32, and the dividing partitions between adjacent passes or stages are indicated by the reference numeral 34.

In the first stage 24, a proportion of the sulphur dioxide in the gas mixture reacts with oxygen over the catalyst for form sulphur trioxide and the resulting gas mixture leaves the first stage 24 at a temperature in the range 600 to 620°C. Typically, this proportion is substantially less than 50 mole %. In this example approximately 40 mole % of the sulphur dioxide is converted in the first stage. Even though this is a smaller percentage conversion than normally takes place in the first stage of a conventionally-operated converter, it is to be appreciated that the total number of moles of sulphur dioxide converted in the first stage 24 is substantially greater than in a conventionally-operated converter. An excessive temperature rise in the first stage 24 of the converter 22 does not take place since carbon dioxide has a significantly greater molar heat capacity. As illustrated in Figure 2 of the drawings, were nitrogen to be substituted for carbon dioxide in the first stage of the converter 22, the percentage conversion that could be achieved before the temperature rose to the chosen exit temperature in the range 600 to 620°C would be substantially less.

The gas mixture leaves the first stage 24 of the converter 22 through an outlet 36 and is cooled in a heat exchanger 38 to a temperature in the range 400 to 450°C. Either upstream of the heat exchanger 38, or downstream thereof as shown in Figure 1, oxygen having a purity of more than 99.9% by volume is introduced into the mixture through a passage 42 so as to increase the concentration of oxygen in the gas mixture and thus to adjust the mole ratio of sulphur dioxide to oxygen to a value typically in the range 2:1 to 2.5:1. The gas mixture then enters the second stage 26 of the converter 22 through the inlet 40. Approximately another 40 mole % of the sulphur trioxide by reaction with oxygen over the catalyst. The gas mixture now containing yet more sulphur trioxide leaves the second stage 26 through an outlet 44 at a temperature typically in the range 600 to 620°C and is cooled in a heat exchanger 46 to a temperature in the range 400 to 450°C. The gas mixture is enriched in oxygen by mixing with it a stream of oxygen having a purity greater than 99.9% by volume, the stream of oxygen being supplied through a passage 50 terminating (as shown in Figure 1) in an inlet 48 to the third stage 28 of the converter or alternatively in the outlet 44. The oxygen-enrichment of the gas mixture results in its mole ratio of sulphur dioxide to oxygen being adjusted to a value in the range 0.75:1 to 1:1.

The gas mixture, thus enriched in oxygen, enters the third stage 28 of the converter 22 through the inlet 48. Further reaction between the residual sulphur dioxide and oxygen takes place over the catalyst in the third stage and about a further 17% of the sulphur dioxide in the gas mixture entering the first stage 24 of the converter 22 is converted to sulphur trioxide. The resulting gas mixture leaves the third stage 28 of the converter 22 through an outlet 52. It is then cooled in a heat exchanger 54 to a temperature suitable for sulphur trioxide absorption, and then passed into a sulphur trioxide absorber 56 of conventional kind. Removal of the sulphur trioxide facilitates subsequent conversion of the residual sulphur. After passing through the absorber 56, the gas mixture, now sulphur dioxide substantially free of sulphur trioxide, is passed through a heat exchanger 58 in which it is heated to a temperature typically in the range 400 to 450°C.

The gas mixture is then passed into a fourth stage 30 of the converter 2 through an inlet 60. Reaction of the residual sulphur dioxide with the residual oxygen over the catalyst in the fourth stage enables most of the residual sulphur dioxide to be converted to sulphur trioxide and thereby enables an overall conversion efficiency of at least 99.5% to be achieved. The resulting gas mixture leaves the fourth stage 30 of the converter 22 through outlet 62 and is cooled in a heat exchanger 64 to a temperature suitable for the absorption of the sulphur trioxide in a conventional sulphur trioxide absorber 66 with the result that the sulphuric acid used to effect the absorption is increased in concentration. The residual unabsorbed gas consisting essentially of carbon dioxide may be vented from the process or may be compressed and, if desired, liquefied as a substantially pure carbon dioxide product. If desired, further purification to remove any traces of impurities may be carried out prior to such compression and liquefaction.

It is possible in at least some of the heat exchangers employed in the plant shown in Figure 1 to use the gas mixture being heated in one part of the process to provide cooling for the gas mixture in another part of the process. Thus, the total number

of heat exchangers may be reduced in comparison to that shown in Figure 1.

The process described with reference to Figure 1 of the drawings is summarised in graphical form in Figure 2. Adjusting the oxygen concentration of the gas mixture between the first and second and second and third stages of the converter changes the equilibrium line. As described above, Figure 2 also illustrates the difficulty in obtaining adequate conversion were an equal number of moles of nitrogen to be substituted for the carbon dioxide in the first stage of the converter. It is to be appreciated that the slope of the operating line AB (percentage conversion vs temperature) will decrease as nitrogen is substituted for carbon dioxide in the gas mixture entering the first stage. In conventional processes, the slope of the corresponding first stage operating line is greater than that of AB and thus a greater first stage conversion efficiency is achieved. However, in view of the greater sulphur dioxide concentrations available in subsequent stages and the oxygen enrichment that is performed it becomes possible to «catch-up» on conversion in the later stages. Moreover, with a sulphur dioxide concentration of about 26% by volume in the gas entering the first stage of the converter, a rate of production of sulphuric acid in the order of twice that of a conventional converter of comparable size may be achieved.

In Figure 3 there is illustrated the variation in the rate of conversion with sulphur dioxide concentration at different constant oxygen concentrations and at constant pressure (1.7 bar absolute) and at constant temperature (450°C). The graph shows that at 28% $SO_2$ concentration a rate of reaction equal to that of a conventional 11% $SO_2$ - 10% $O_2$ mixture can be achieved when the oxygen concentration lies between 6 and 8%.

In Figure 4 there is shown a similar graph but at a temperature of 600°C which corresponds approximately to the outlet temperature of the first catalytic stage 24. In the example described with reference to Figure 1 the residual oxygen concentration in the gas mixture leaving the first stage is in the order of 2% by volume and the sulphur dioxide concentration in the order of 16% by volume, whereas in a conventional process employing 11% by volume $SO_2$ - 10% by volume $O_2$ in the feed mixture and about 65% conversion in the first stage, the gas mixture leaving the first stage would contain in excess of 5% $SO_2$ and in excess of 7% by volume $O_2$. It can be seen from Figure 4 that the rate of reaction of a 5% by volume $SO_2$ - 7% by volume $O_2$ mixture would be considerably in excess of that of a 16% by volume $SO_2$ - 2% by volume $O_2$ mixture. Thus, the percentage conversion achievable in the first stage is less dependent on residence time in the method according to the invention that it is in conventional methods.

## Claims

1. A method of manufacturing sulphuric acid, comprising the steps of:

a) forming sulphur dioxide from a sulphur-containing material;

b) burning a carbon-containing fuel to provide heat for the formation of the sulphur dioxide from the sulphur-containing material and supplying oxygen-rich gas selected from pure oxygen and a gas mixture comprising at least 30% by volume of oxygen to support the combustion of the fuel;

c) forming a gas mixture comprising said sulphur dioxide and the gases resulting from the combustion of said fuel;

d) drying said gas mixture, the gas mixture after drying containing at least 30% by volume of carbon dioxide and more than 16% by volume of sulphur dioxide.

e) subjecting the dried gas mixture to a plurality of stages of catalytic conversion so as to convert sulphur dioxide in the mixture to sulphur trioxide.

f) adjusting the temperature of the gas mixture upstream of each stage, and adjusting the mole ratio of sulphur dioxide to oxygen upstream of the first stage and intermediate the first and second stages, wherein said mole ratio is adjusted by adding oxygen-rich gas selected from pure oxygen or a gas mixture comprising at least 30% by volume of oxygen to the gas mixture and the gas mixture entering the first stage has, after its adjustment, a mole ratio of sulphur dioxide to oxygen greater than 2:1; and

g) absorbing said sulphur trioxide to form sulphuric acid.

2. A method according to claim 1, in which the sulphur-containing material is sulphate waste material comprising sulphuric acid and iron sulphate.

3. A method according to claim 1, in which the gas mixture, after drying, but before conversion, includes at least 50% by volume of carbon dioxide and at least 20% by volume of sulphur dioxide.

4. A method according to claim 3, in which the gas mixture after drying, but before conversion, includes at least 60% by volume of carbon dioxide and at least 25% by volume of sulphur dioxide.

5. A method according to claim 1, in which the mole ratio of sulphur dioxide to oxygen in the gas mixture entering the first catalyst stage is greater than 3:1.

6. A method according to claim 1, in which the gas mixture entering the second catalytic stage has a mole ratio of sulphur dioxide to oxygen of at least two to one.

7. A method according to claim 1, in which there are four or five stages of catalytic conversion.

8. A method according to claim 7, in which oxygen-rich gas is added to the gas mixture intermediate the second and third catalytic stage so as to adjust the mole ratio of sulphur dioxide to oxygen in the gas mixture.

9. A method according to claim 8, in which no further oxygen-rich gas is added to the gas mixture downstream of the third catalytic stage.

## Patentansprüche

1. Verfahren zur Herstellung von Schwefelsäure, umfassend folgende Stufen:

a) Bildung von Schwefeldioxid aus einem schwefelhaltigen Material;

b) Verbrennen eines kohlenstoffhaltigen Brennstoffes zur Bereitstellung von Wärme für die Bildung des Schwefeldioxids aus dem schwefelhaltigen Material und Zufuhr eines sauerstoffreichen Gases, ausgewählt aus reinem Sauerstoff und einer wenigstens 30 Vol.-% Sauerstoff umfassenden Gasmischung, zur Unterstützung der Verbrennung des Brennstoffes;

c) Bildung einer Gasmischung, welche dieses Schwefeldioxid und die aus der Verbrennung dieses Brennstoffes herrührenden Gase umfaß;

d) Trocknen dieser Gasmischung, wobei die Gasmischung nach dem Trocknen wenigstens 30 Vol.-% Kohlendioxid und mehr als 16 Vol.-% Schwefeldioxid enthält;

e) Unterziehen der getrockneten Gasmischung einer Vielzahl von Stufen der katalytischen Umwandlung zur Umwandlung des Schwefeldioxides in der Mischung in Schwefeltrioxid;

f) Einstellen der Temperatur der Gasmischung strömungsaufwärts von jeder Stufe und Einstellung des Molverhältnisses von Schwefeldioxid zu Sauerstoff strömungsaufwärts zur ersten Stufe und zwischen der ersten und der zweiten Stufe, worin das Molverhältnis durch Zugabe eines unter reinem Sauerstoff oder einer wenigstens 30 Vo.-% Sauerstoff umfassenden Gasmischung ausgewählten, sauerstoffreichen Gases zu der Gasmischung eingestellt wird und die in die erste Stufe eintretende Gasmischung nach ihrer Einstellung ein Molverhältnis von Schwefeldioxid zu Sauerstoff größer als 2:1 aufweist; und

g) Absorbieren dieses Schwefeltrioxides zur Bildung von Schwefelsäure.

2. Verfahren nach Anspruch 1, bei welchem das schwefelhaltige Material ein Sulfatabfallmaterial ist, welches Schwefelsäure und Eisensulfat umfaßt.

3. Verfahren nach Anspruch 1, in welchem die Gasmischung nach dem Trocknen jedoch vor der Umwandlung wenigstens 50 Vol.-% Kohlendioxid und wenigstens 20 Vol.-% Schwefeldioxid einschließt.

4. Verfahren nach Anspruch 3, in welchem die Gasmischung nach dem Trocknen jedoch vor der Umwandlung wenigstens 60 Vol.-% Kohlendioxid und wenigstens 25 Vol.-% Schwefeldioxid einschließt.

5. Verfahren nach Anspruch 1, in welchem das Molverhältnis von Schwefeldioxid zu Sauerstoff in der in die erste katalytische Stufe eintretenden Gasmischung grösser als 3:1 ist.

6. Verfahren nach Anspruch 1, in welchem die in die zweite katalytische Stufe eintretende Gasmischung ein Molverhältnis von Schwefeldioxid zu Sauerstoff von wenigstens zwei zu eins besitzt.

7. Verfahren nach Anspruch 1, in welchem vier oder fünf Stufen der katalytischen Umwandlung vorhanden sind.

8. Verfahren nach Anspruch 7, in welchem sauerstoffreiches Gas zu der Gasmischung zwischen der zweiten und dritten katalytischen Stufe zur Einstellung des Molverhältnisses von Schwefeldioxid zu Sauerstoff in der Gasmischung zugesetzt wird.

9. Verfahren nach Anspruch 8, in welchem kein weiteres sauerstoffreiches Gas zu der Gasmischung strömungsabwärts von der dritten katalytischen Stufe zugesetzt wird.

**Revendications**

1. Procédé de fabrication d'acide sulfurique, comprenant les étapes consistant:

a) à former du bioxyde de soufre à partir d'une matière contenant du soufre;

b) à brûler un combustible contenant du carbone, pour fournir de la chaleur pour la formation du bioxyde de soufre à partir de la matière contenant du soufre et à fournir un gaz riche en oxygène, choisi entre de l'oxygène pur et un mélange gazeux comprenant au moins 30% en volume d'oxygène, pour entretenir la combustion du combustible;

c) à former un mélange gazeux comprenant ledit bioxyde de soufre et les gaz résultant de la combustion dudit combustible;

d) à sécher ledit mélange gazeux, le mélange gazeux contenant, après son séchage, au moins 30% en volume de bioxyde de carbone et plus de 16% en volume de bioxyde de soufre;

e) à soumettre le mélange gazeux, séché, à l'action de plusieurs étages de conversion catalytique pour transformer du bioxyde de soufre du mélange en du trioxyde de soufre;

f) à ajuster la température du mélange gazeux, en amont de chaque étage, et à ajuster le rapport molaire du bioxyde de soufre à l'oxygène en amont du premier étage et entre les premier et second étages, ledit rapport molaire étant ajusté par addition d'un gaz riche en oxygène, choisi parmi de l'oxygène pur et un mélange gazeux comprenant au moins 30% en volume d'oxygène, au mélange gazeux et le mélange gazeux entrant dans le premier étage ayant, après son ajustement, un rapport molaire du bioxyde de soufre à l'oxygène supérieur à 2:1; et

g) à absorber ledit trioxyde de soufre pour former de l'acide sulfurique.

2. Procédé selon la revendication 1, dans lequel la matière contenant du soufre est du déchet de type sulfate comprenant de l'acide sulfurique et du sulfate de fer.

3. Procédé selon la revendication 1, dans lequel le mélange gazeux, après séchage et avant conversion, comprend au moins 50% en volume de bioxyde de carbone et au moins 20% en volume de bioxyde de soufre.

4. Procédé selon la revendication 3, dans lequel le mélange gazeux, après séchage mais avant conversion, comprend au moins 60% en volume de bioxyde de carbone et au moins 25% en volume de bioxyde de soufre.

5. Procédé selon la revendication 1, dans lequel le rapport molaire du bioxyde de soufre à l'oxygène, dans le mélange gazeux entrant dans le premier étage de catalyseur, est supérieur à 3:1.

6. Procédé selon la revendication 1, dans lequel le mélange gazeux entrant dans le second étage catalytique présente un rapport molaire du bioxyde de soufre à l'oxygène au moins égal à 2:1.

7. Procédé selon la revendication 1, dans lequel il y a quatre ou cinq étages de conversion catalytique.

8. Procédé selon la revendication 7, dans lequel du gaz enrichi en oxygène est ajouté au mélange gazeux entre les second et troisième étages catalytiques de façon à ajuster le rapport molaire du bioxyde de soufre à l'oxygène dans le mélange gazeux.

9. Procédé selon la revendication 8, dans lequel on n'ajoute pas de gaz supplémentaire enrichi en oxygène au mélange gazeux en aval du troisième étage catalytique.

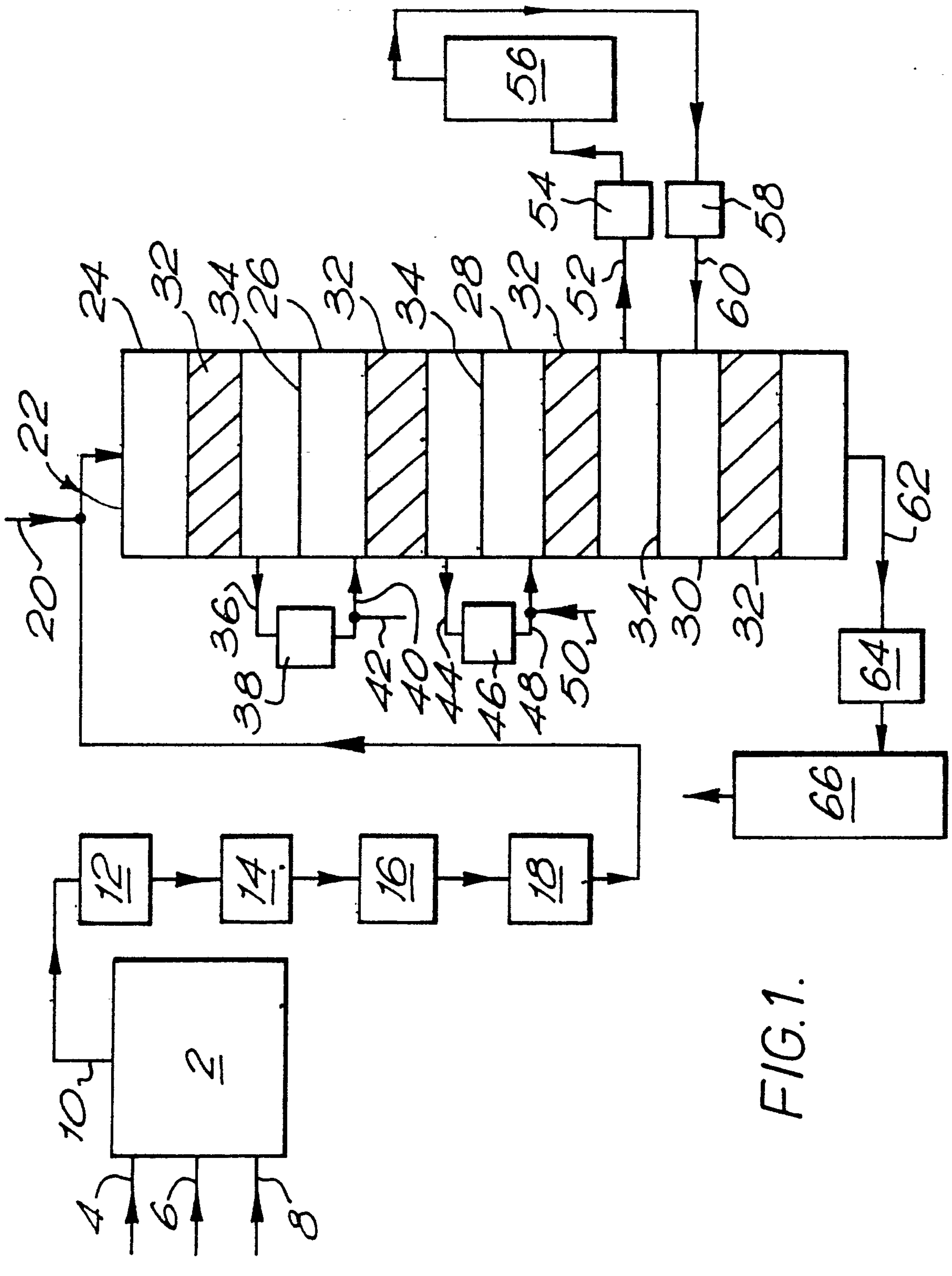

2
4
6
8
10
12
14
16
18
20
22
24
26
28
30
32
34
36
38
40
42
44
46
48
50
52
54
56
58
60
62
64
66


FIG.1.

FIG. 2.

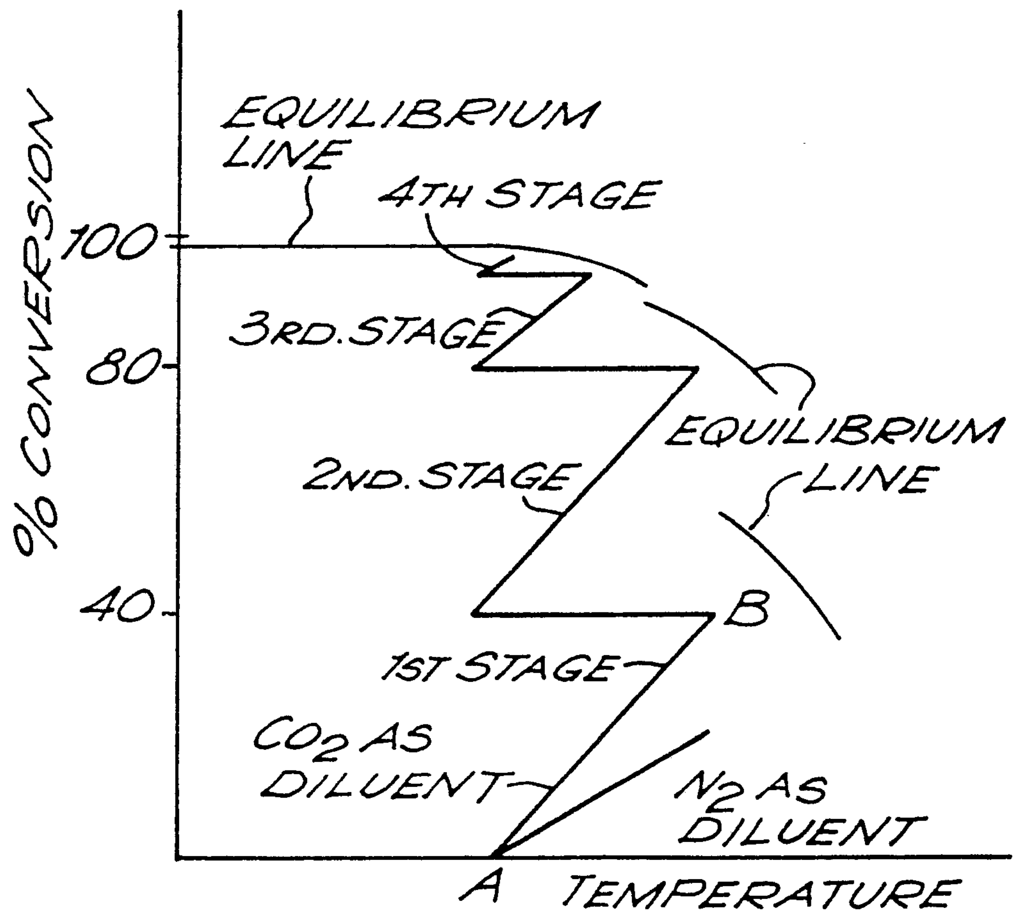
% CONVERSION
100
80
40
EQUILIBRIUM LINE
4TH STAGE
3RD. STAGE
EQUILIBRIUM LINE
2ND. STAGE
B
1ST STAGE
$CO_2$ AS DILUENT
$N_2$ AS DILUENT
A
TEMPERATURE

FIG.3.

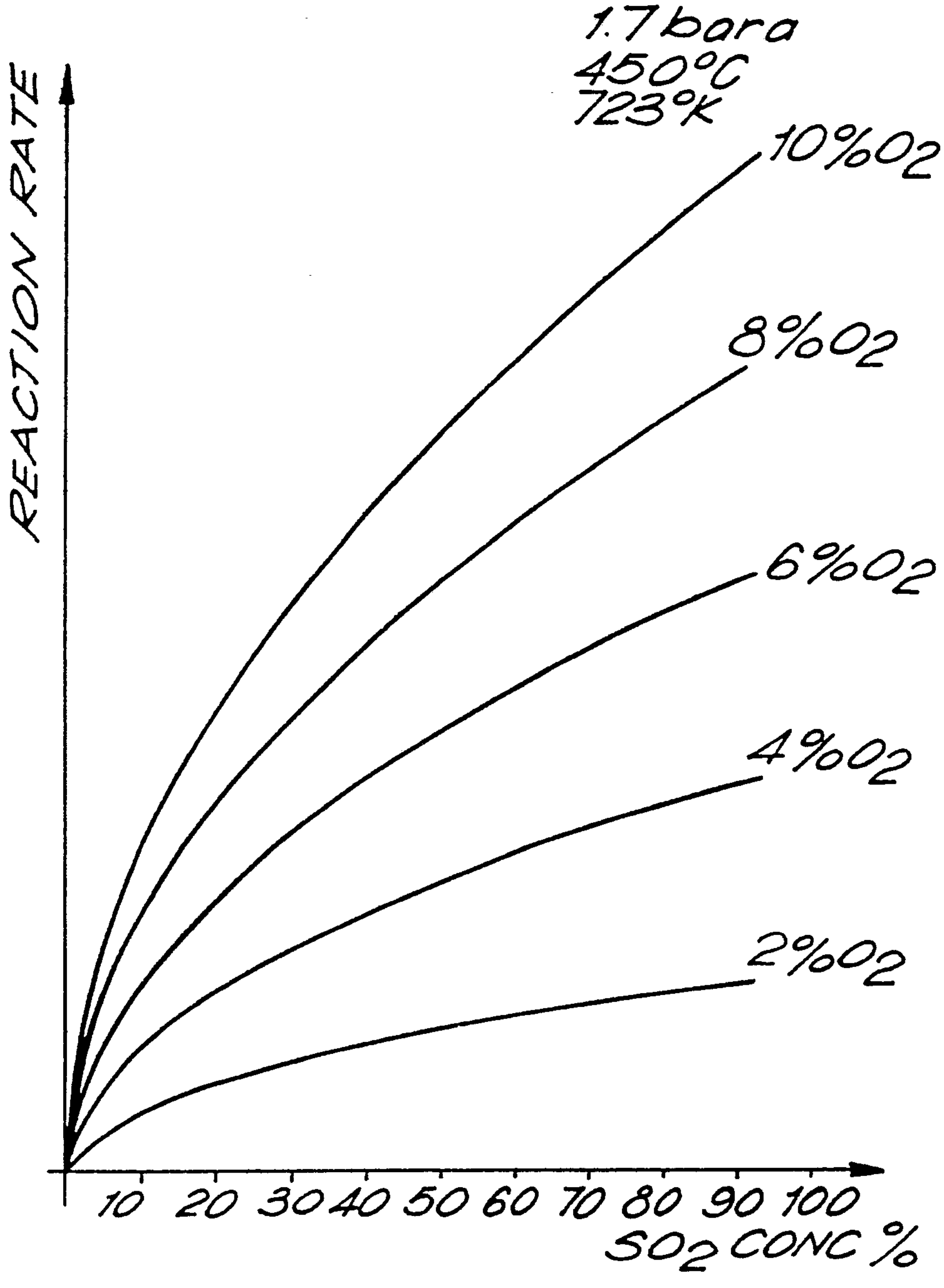
1.7 bara
450°C
723°K
REACTION RATE
10% O2
8% O2
6% O2
4% O2
2% O2
10 20 30 40 50 60 70 80 90 100
SO2 CONC %

FIG. 4.

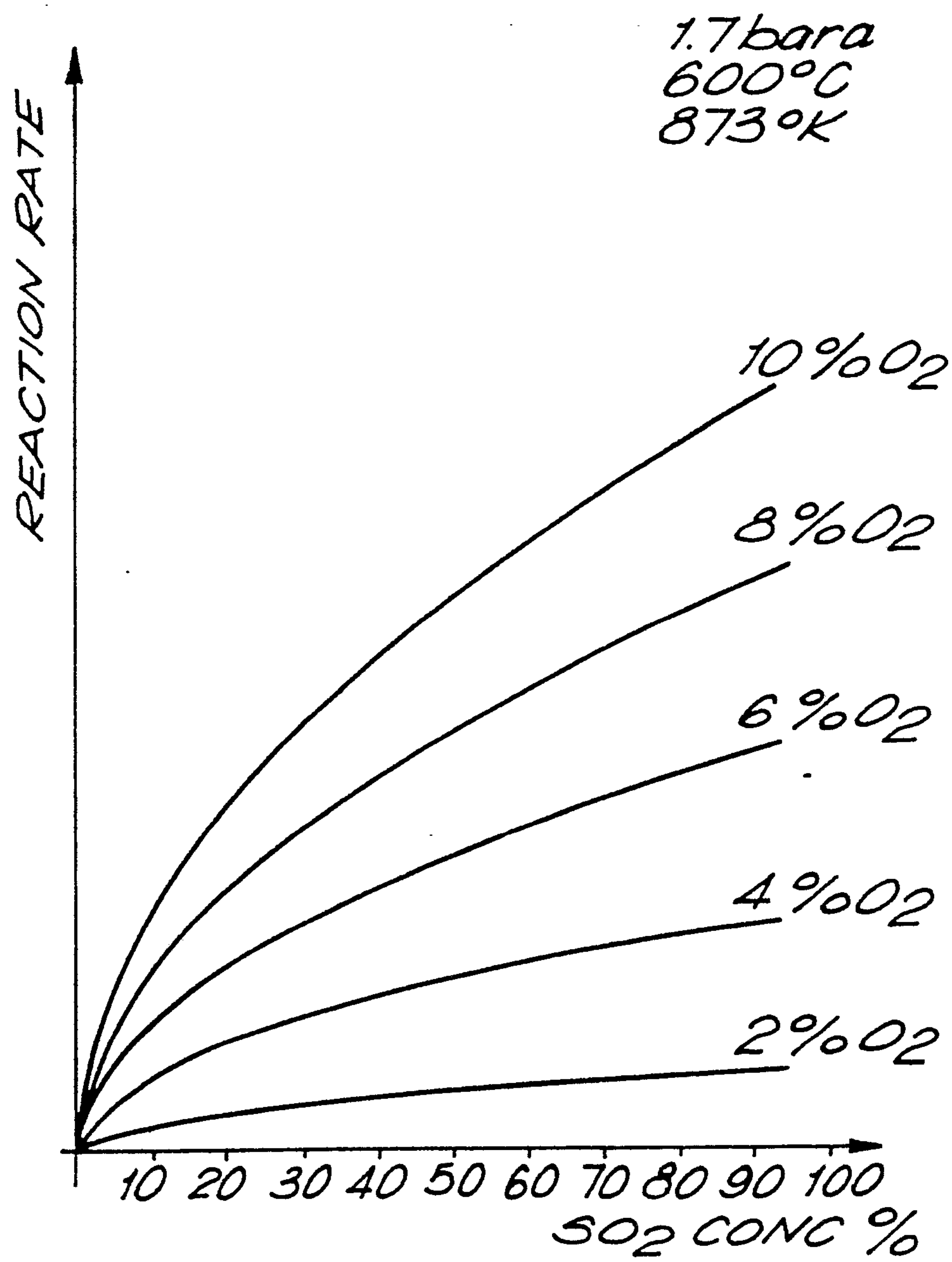
1.7 bara
600°C
873°K
REACTION RATE
10 % O2
8 % O2
6 % O2
4 % O2
2 % O2
10 20 30 40 50 60 70 80 90 100
SO2 CONC %